**Europäisches Patentamt**

**European Patent Office**

**Office européen des brevets**

(19)

(11) Veröffentlichungsnummer: **0 135 525**
**B1**

## EUROPÄISCHE PATENTSCHRIFT

(12)

(45) Veröffentlichungstag der Patentschrift:
**07.01.88**

(21) Anmeldenummer: **84900637.4**

(22) Anmeldetag: **27.01.84**

(86) Internationale Anmeldenummer:
**PCT/HU 84/00009**

(87) Internationale Veröffentlichungsnummer:
**WO 84/02962 (02.08.84** Gazette **84/18)**

(51) Int. Cl.⁴: **F 16 D 43/284**

(54) **REIBUNGSKUPPLUNG INSBESONDERE FÜR DIE UBERTRAGUNG KLEINER DREHMOMENTE.**

(30) Priorität: **28.01.83 HU 30083**

(43) Veröffentlichungstag der Anmeldung:
**03.04.85 Patentblatt 85/14**

(45) Bekanntmachung des Hinweises auf die Patenterteilung:
**07.01.88 Patentblatt 88/1**

(84) Benannte Vertragsstaaten:
**AT**

(56) Entgegenhaltungen:
**AT - B - 183 999**
**DE - B - 1 103 089**
**US - A - 2 891 641**
**US - A - 2 918 824**

(73) Patentinhaber: **POOR, Károly, Sziv u. 30.III. 10,**
**H-1063 Budapest (HU)**
Patentinhaber: **POOR, Magdolna, Sziv u. 30. III. 10.,**
**H-1063 Budapest (HU)**

(72) Erfinder: **POOR, Károly, Sziv u. 30.III. 10,**
**H-1063 Budapest (HU)**
Erfinder: **POOR, Magdolna, Sziv u. 30. III. 10.,**
**H-1063 Budapest (HU)**

(74) Vertreter: **Kern, Wolfgang, Dipl.-Ing. et al, Patentanwälte**
**Tischer, Kern & Brehm Albert-Rosshaupter-Strasse 73,**
**D-8000 München 70 (DE)**

ACTORUM AG

## Beschreibung

Die Erfindung betrifft eine Reibungskupplung, insbesondere zur Übertragung von kleinen Drehmomenten, gemäss dem Oberbegriff des Anspruchs 1. Eine solche Reibungskupplung ist aus der AT-A-183 999 bekannt.

Diese Reibungskupplung verringert zwar aufgrund ihres Schlupfes stossartige Belastungen zwischen dem antreibenden und dem getriebenen Teil von Maschinenanlagen, in denen sie Verwendung findet, jedoch ist diese Kupplung insofern nicht flexibel genug, als sie die gewünschte im wesentlichen stossfreie Antriebskraftübertragung nicht sowohl bei kleinen als auch bei grossen elektrischen Leistungen ermöglicht, ohne dass eine Überdimensionierung des Antriebsmotors erforderlich ist, wobei unter kleinen Leistungen solche von etwa 0,5 kW und unter grossen Leistungen solche von über 100 kW zu verstehen sind.

Es sind ferner sogenannte Sicherheits-Wellenkupplungen bekannt.

Eine solche ist beispielsweise die sogenannte Anlasswellenkupplung, welche zur Vermeidung der stossartigen Belastungen die angetriebene Maschine nur dann anlässt, wenn der Antriebsmotor die volle Drehzahl erreicht hat.

Mit Ausnützung der Zentrifugalkraft arbeitet die «PULVIS» benannte Wellenkupplung, bei welcher auf dem Ende der treibenden Wellenseite eine mit Flügeln versehene Nabe sitzt, während auf der getriebenen Seite eine Ringflanschnabe so angeordnet ist, dass sie über elastische Elemente an das die Flügelnabe umschliessende Gehäuse angreift. Zur Übertragung des Momentes sind im Innern des Gehäuses mit Graphit bestrichene Metallkugeln frei angeordnet. Die Menge an Metallkugeln bestimmt die Grösse des übertragbaren Drehmomentes. Eine solche Kupplung ist z.B. in PATTANTYUS: Handbuch für Maschinen- und Elektroingenieure, Band 3, Technischer Buchverlag, Budapest, 1961, Seite 473 beschrieben. Solche zentrifugalen Wellenkupplungen haben aber den Nachteil, dass sie gegen Überlastung sehr empfindlich sind, indem dann die angetriebene Seite relativ weit zurückbleibt.

Mehrere Anwendungsmöglichkeiten bietet die Induktionswellenkupplung. Bei dieser aber ändert sich die Grösse der übertragbaren Leistung in Abhängigkeit vom Erregerstrom. Die Induktionswellenkupplungen werden im allgemeinen als Sicherheitskupplung verwendet.

Die obenerwähnten Wellenkupplungen haben den gemeinsamen Nachteil, dass ihr Einsatzgebiet nur beschränkt ist, ferner dass sie teuer sind, schliesslich dass ihre Konstruktionsabmessungen – insbesondere bei der Übertragung von kleinen Leistungen – die Abmessungen des Antriebsmotors stark überschreiten.

Bekannt sind ferner solche Magnetpulver-Wellenkupplungen, welche mit Gleichstrom arbeiten, und in derem Innern eine Erregerspule eingebaut ist. Gleichfalls im Innern der Wellenkupplung werden ferner mit Graphit behandelte oder reine Eisenspäne eingebracht, deren Teilchen sich durch die Einwirkung des elektrischen Stroms zu einer kraftübertragenen Verbindung umordnen. Die übertragbare Leistung ist auch hier eine Funktion der Erregung und dieser nahezu direkt proportional. Der Nachteil der Magnetpulverkupplung besteht darin, dass ihre Fertigung teuer ist und zum Erzeugen des Gleichstroms noch eine zusätzliche Speiseeinheit erforderlich wird. Ferner kann sie an feuer- bzw. explosionsgefährdeten Orten nicht benützt werden, da bei ihrer Betätigung an den Kohlenbürsten Funken entstehen.

Zur Drehzahlregulierung werden ebenfalls verschiedene hydrodynamische Wellenkupplungen verwendet, bei denen sich die Drehzahl als Funktion der geförderten Flüssigkeit auf der getriebenen Seite ändert. Auch diese Geräte sind teuer und kommen bei kleinen Antriebsleistungen (unter 20 kW) wegen ihrer grossen Baumasse und ihres Gewichtes kaum zur Anwendung.

Bei den aus Antriebsmotor und angetriebener Maschine bzw. Maschinengruppe bestehenden Einrichtungen ergibt sich ein weiteres Problem insofern, als beim Anlassen von Maschinen oder Maschinengruppen mit grosser Masse Massenkräfte auftreten können, die ein Mehrfaches des Kupplungsmomentes des Anlassermotors überschreiten. Deshalb wird wegen des zum Anlassen benötigten Momentmehrbedarfes der Motor überdimensioniert. Nach der Betriebsphase des Anlassens aber läuft ein solcher überdimensionierte Motor schon reichlich unterhalb seiner Nennleistung, und als Folge hiervon verschlechtert sich beträchtlich der Leistungs-Faktor (cos φ) des elektrischen Antriebsmotors.

Bei der aus der DE-B-1 103 089 bekannten Fliehkraftkupplung wird die stirnseitige Verengung des die Füllung aufnehmenden Ringraums durch an den beiden einander gegenüberliegenden Wänden ausgebildete Abschrägungen erzeugt. Dadurch ergibt sich aber neben einem relativ grossen Herstellungsaufwand der Nachteil, dass die Kupplung nur für ein einziges Drehmoment angewendet werden kann, wobei als Füllung ausschliesslich frei bewegliche Körper in Form von festen Materialien vorgeschlagen werden, bei denen die Wärmewirkung praktisch keine selbstregulierende Rolle spielt, d.h., auf das Füllvolumen durch die aufgrund der zwischen den beweglichen Körpern auftretenden Reibung erzeugten Wärme keine Auswirkungen hat und damit auch nicht auf das von der Kupplung übertragbare maximale Drehmoment.

Die Aufgabe der Erfindung besteht deshalb darin, die Reibungskupplung der genannten Art so zu verbessern, dass sie in der Lage ist, insbesondere kleine Leistungen wirtschaftlich zu übertragen, wobei die Wirtschaftlichkeit insbesondere dadurch zum Ausdruck kommen soll, dass eine Überdimensionierung des Antriebsmotors vermieden wird.

Die Lösung dieser Aufgabe kennzeichnet sich durch die im Anspruch 1 wiedergegebene Merkmalskombination. Der der Erfindung zugrundeliegende Gedanke ist somit darin zu sehen, die den Ringraum radial nach aussen verengenden Flächen durch einen losen, zusätzlichen Einsatzring mit trapezförmigem Querschnitt zu schaffen, der einfach und billig hergestellt werden kann und austauschbar ist, und auf diese Weise das Ringraumgehäuse selbst nicht mit derartigen Flächen zu versehen, die notgedrungen unveränderlich wären, während durch die Austauschbarkeit des Ringkörpers ein und dieselbe Kupplung mit verschiedenen Einsatzringen für verschiedene Belastungen benutzt werden kann, da mit dem Winkelwert α die Axialkomponente ($P_A$) sich an sich beliebig einstellen lässt.

Vorteilhafte Ausgestaltungen der Erfindung sind in den Unteransprüchen gekennzeichnet.

Die Erfindung wird nun beispielshalber an Hand der Zeichnung näher erläutert. Es zeigt:

Figur 1 einen Querschnitt der Reibungskupplung gemäss der Erfindung;

Figur 2 einen Schnitt entlang der Linie II–II in Figur 1.

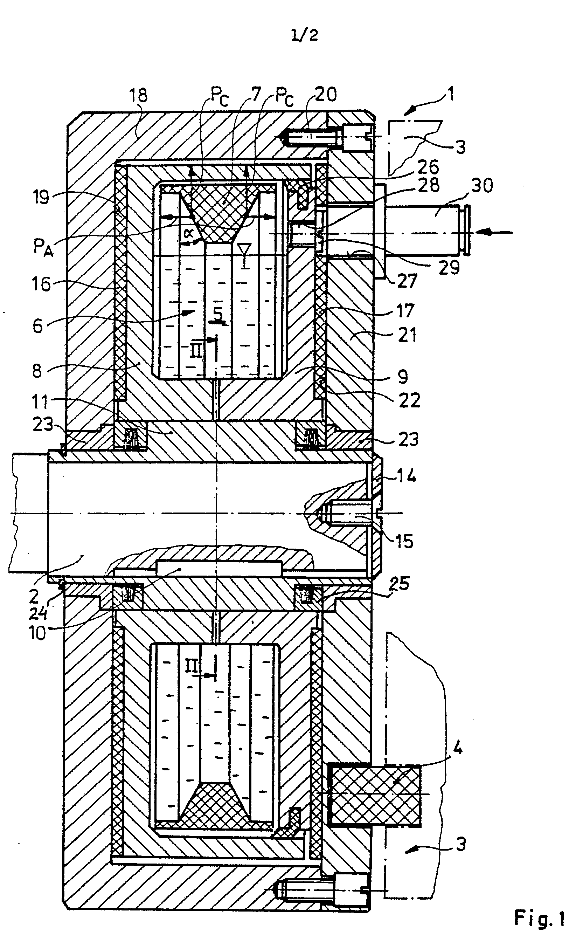

In Figur 1 ist die Reibungskupplung als Ganzes mit 1 bezeichnet. Diese verbindet eine Treibwelle 2 eines nicht eingezeichneten Motors mit einer auf einer ebenfalls nicht eingezeichneten Welle einer angetriebenen Maschine bzw. Maschinengruppe fixierten Scheibe 3 über drehmomentübertragende Elemente, im vorliegenden Falle über Gummistopfen 4.

Wie bei Kupplungen bekannt, ist ein zusammenarbeitendes Kupplungsscheibenpaar mit Hilfe einer Betätigungseinheit in axialer Richtung im Sinne des Schliessens der Kupplung gegenseitig verschiebbar angeordnet Bei der Reibungskupplung 1 dient als Betätigungseinheit eine in einem geschlossenen, koaxial ausgestalteten Ringraum 5 untergebrachte, aus Flüssigkeit und/oder aus körniger Materie bestehende Füllung 6, wobei der Ringraum 5 entlang seines Aussenmantels wenigstens mit einem schrägen Ablenkelement 7 versehen ist. Das Ablenkelement 7 hat die Aufgabe, durch die axiale Kraftkomponente $P_A$, die beim Rotieren der verschiebbaren Kupplungsscheibe, bzw. Kupplungsscheiben von der Zentrifugalkraft $P_C$ der Füllung 6 herrührt, die zusammenarbeitenden Kupplungsscheiben im Sinne des Schliessens axial zu verschieben.

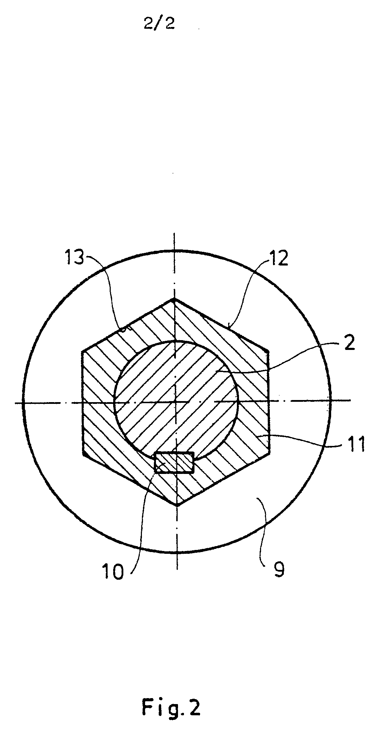

Bei dem dargestellten Ausführungsbeispiel weist die Reibungskupplung 1 zwei zusammen rotierende, in axialer Richtung verschiebbare erste Kupplungsscheiben 8 und 9 auf. Die Kupplungsscheiben 8 und 9 sind im vorliegenden Falle an der äusseren Mantelfläche 12 einer Nabe 11 drehfest, d.h. in Drehrichtung formschlüssig angeordnet. Die Nabe 11 ist auf der Treibwelle 2 mit einem Riegel 10 fixiert. Die drehfeste Verbindung wird im vorliegenden Falle dadurch erreicht, dass die Mantelfläche 12 der Nabe 11 sechseckig ist, und sich an ihr die Kupplungsscheiben 8 und 9 mit ihren mittigen sechseckigen Öffnungen 13 anschliessen (Figur 2). Am Ende der Treibwelle 2 ist die Nabe 11 in axialer Richtung durch eine Scheibe 14 und eine Schraube 15 fixiert.

Wie bereits erwähnt, sind die beiden Kupplungsscheiben 8 und 9 in axialer Richtung verschiebbar und auf ihren äusseren Stirnflächen mit Reibungseinlagen 16 und 17 versehen. Die mit den ersten Kupplungsscheiben 8 bzw. 9 zusammenarbeitenden zweiten Kupplungsscheiben werden durch eine Stirnfläche 19 eines Gehäuses 18 sowie durch eine Stirnfläche 22 eines am Gehäuse 18 mit Schrauben 20 lösbar verbundenen Deckels 21 gebildet. Das mit dem Deckel 21 zusammengeschraubte Gehäuse 18 kann gegenüber den mit der Treibwelle 2 zusammen rotierenden Kupplungsscheiben 8 und 9 in gelöstem Zustand der Reibungskupplung 1 frei verdreht werden. Das Gehäuse 18 und der Deckel 21 sind hier an den zylindrischen Enden der Nabe 11 in Lagern 23 gebettet. Das Lager 23 kann jedes beliebige, an sich bekannte Walzenlager oder aber auch z.B. eine selbstschmierende Lagerbuchse aus Sinterbronze sein. Das Lager 23 ist an der Nabe 11 mit einem Fixierring 24 befestigt.

Wie schon oben erwähnt, ist der Ringraum 5, welcher die Füllung 6 aufnimmt, dicht verschlossen. Hierzu dienen beim Anschluss der Nabe 11 und der Kupplungsscheiben 8 bzw. 9 Dichtungsringe 25, beim Anschlusteil der Kupplungsscheiben 8 und 9 aber ein Dichtungselement 26. Letzteres ermöglicht auch eine relative Axialverschiebung der Kupplungsscheiben 8 und 9.

In dem dargestellten Falle ist das schräge Ablenkelement 7, das die axiale Schliesskraft zustandebringt, als ein in den Ringraum 5 einsetzbarer, selbständiger Ring ausgestaltet und z.B. aus Metall oder einem entsprechenden Kunststoff, vorzugsweise aus Polyamid, gefertigt. Das Ablenkelement 7 hat im wesentlichen einen trapezförmigen Querschnitt, dessen von der schrägen Ablenkplatte mit der Senkrechten eingeschlossener Winkel α zwischen 8° und 65° beträgt, im vorliegenden Fall aber 25°. Dieser Winkelwert muss selbstverständlich jeweils dem Anwendungszweck entsprechend gewählt werden.

Der Ringraum 5 kann über eine im Deckel 21 vorgesehene Öffnung 27 sowie über eine in den Kupplungsscheiben 8 und 9 hergestellte Öffnung 28 gefüllt werden. Danach wird die Öffnung 28 mit einer Schraube 29 verschlossen. Auch die Öffnung 27 ist zweckmässigerweise mit einem Gewinde versehen, an welchem beim Füllen des Ringraumes 5 ein Füllstutzen 30 angeschlossen werden kann.

In dem in Fig. 1 dargestellten Falle erreicht im Ringraum 5 die Spiegelhöhe der Füllung 6 fast den unteren Rand der Öffnung 28. Wie schon erwähnt wird die Zentrifugalkraft dieser Füllung 6 dazu benutzt, mit Hilfe des schrägen Ablenkelementes 7 die Reibungskupplung in vorbestimmter Weise zu schliessen. Die Füllung 6 kann beispielsweise Wasser, Öl oder eine Mischung derselben sein. Bei kleinerer Leistung, z.B. unter 0,5 kW, ist es sogar zweckmässig, Quecksilber und/oder ein Metallschrotgemisch anzuwenden. Der Metallschrot kann aus Stahl und/oder Blei hergestellt sein.

Die Reibungskupplung gemäss der Erfindung arbeitet wie folgt:

Nach dem Zusammenbau, dem Anfüllen des Ringraumes 5 mit der Füllung 6 sowie dem Einschrauben der Schraube 29 ist die Reibungskupplung 1 in betriebsbereitem Zustand. Danach kann der Antriebsmotor angelassen werden, worauf man mit der Treibwelle 2 die Nabe 11 und die sich mit ihr zusammen drehenden Kupplungsscheiben 8 und 9 rotieren lässt. Durch Erhöhung der Drehzahl und durch Einwirkung der immer grösser werdenden Zentrifugalkraft $P_C$ ist die Füllung 6 bestrebt, sich immer mehr über den Mantel des Ringraumes 5 bzw. des Ablenkelementes 7 auszubreiten. Währenddessen sind die axialen Komponenten $P_A$ der Zentrifugalkraft $P_C$ bestrebt, die Kupplungsscheiben 8 und 9 voneinander zu entfernen, d.h. die Kupplung beginnt sich allmählich zu schliessen.

Bei Versuchen wurde die Ausgestaltung der Reibungskupplung so gewählt, dass die getriebene Seite, d.h. hier die Scheibe 3, nur nach Erreichung einer Drehzahl von mindestens 500 Umdrehungen/min angetrieben zu werden beginnt. Bei einer niedrigeren Drehzahl als dieser kann zwischen den Reibungseinlagen 16, 17 und den mit diesen zusammenarbeitenden Stirnflächen 19 und 22 eine Reibung nicht auftreten.

Über einer Drehzahl von 500 U/min wird demnach die von der immer grösser werdenden Zentrifugalkraft $P_C$ der Füllung 6 herrührende, immer mehr zunehmende axiale Komponente $P_A$ die Kupplungsscheiben 8 und 9 mit immer grösserer Kraft an die Stirnflächen 19 bzw. 22 pressen. Demzufolge kommt zusammen mit dem Deckel 21 auch das Gehäuse 18 allmählich in Rotation, während die Gummistopfen 4 als momentübertragende Elemente die Scheibe 3 der getriebenen Seite in Drehung versetzen.

Bei gewissen Einrichtungen der Chemischen Industrie, bzw. beim Einsatz an Autoklaven, ist es zweckmässig, den Ringraum 5 der Reibungskupplung 1 voll mit der Füllung 6 anzufüllen. Beim Anlassen und bei vorübergehenden Überlastungen herrscht zwischen den Reibungseinlagen 16 und 17 infolge der Drehzahldifferenz Schlupf. Durch dieses Rutschen der Kupplung entsteht Wärme, und ein Teil dieser Wärmeenergie wird zur Erwärmung der Füllung 6 aufgebraucht. Infolge des Temperaturanstieges wachsen Volumen und Druck der Füllung 6 im Ringraum 5, so dass auch das von der Reibungskupplung 1 übertragbare Maximalmoment zunimmt. Sobald sich zwischen der treibenden und der getriebenen Seite mit dem Erreichen der Nenndrehzahl auch das Momentgleichgewicht einstellt, d.h. beide Seiten synchron rotieren, hört zwischen den Kupplungsscheibenpaaren der Schlupf der Reibungseinlagen 16 und 17 und damit zugleich auch die Wärmeentwicklung auf. Dies aber hat zur Folge, dass die Füllung 6 abkühlt und auf diese Weise das Nennmoment sich wieder einstellt.

Die mit der erfindungsgemässen Reibungskupplung erzielbaren wichtigsten Vorteile sind folgende:

Die treibende Seite bewirkt ein Anlassen ohne Überlastung.

Sie nimmt die stossweisen Belastungen auf und schützt dadurch die Antriebselemente vor Überlastung.

Ihre Herstellung ist im Vergleich zu den bekannten Lösungen einfacher und billiger; ihre Anwendung aber ergibt eine beträchtliche Energie- und Kosteneinsparung.

Sie kann auch bei kleinen, sogar nur 0,5 kW betragenden Leistungen zuverlässig benutzt werden.

Auch in explosions- und feuergefährdeten Betrieben kann sie zuverlässig angewendet werden, wenn sie aussen mit einer Hülle umgeben wird, was nur einen geringen Kostenaufwand erfordert.

Sie kann für Elektro-, Druckluft- und Verbrennungsmotoren gleichermassen gut verwendet werden, z.B. als in eine Riemenscheibe eingebaute Ausführung.

Selbstverständlich beschränkt sich die Erfindung nicht nur auf die als Beispiel dargestellte Ausführungsform. Es ist auch eine solche Ausführung möglich, bei welcher die Ablenkelemente 7 nicht als ein selbständiges Einzelteil ausgestaltet ist, sondern z.B. zusammen mit der Kupplungsscheibe 8 als ein einziges Stück gefertigt oder an ihr fixiert ist. Ferner genügt für den Betrieb der erfindungsgemässen Reibungskupplung ein einziges Kupplungsscheibenpaar und eine einzige schräge Ablenkfläche des Ablenkelementes 7, jedoch muss diese sich dann im Gehäuse an der mit der Füllung 6 in Verbindung stehenden Ringraumwand abstützen.

**Patentansprüche**

1. Reibungskupplung (1), insbesondere zur Übertragung von kleinen Drehmomenten bei konstanter Drehzahl, die wenigstens eine mit einer Treibwelle (2) zusammen rotierende Kupplungsscheibe (8) und eine mit dieser zusammenarbeitende, mit einer getriebenen Welle verbundene andere Kupplungsscheibe (9) aufweist, welche Kupplungsscheiben in axialer Richtung durch eine Fliehkraft-Betätigungseinheit im Sinne des Schliessens der Kupplung bewegbar angeordnet sind, wobei die Fliehkraft-Betätigungseinheit mit einem koaxialen Ringraum (5) zum Aufnehmen einer Füllung (6) sowie mit mindestens einem den Ringraum radial nach aussen verengenden Ablenkelement (7) im Ringraum (5) versehen ist, dadurch gekennzeichnet, dass das Ablenkelement (7) als ein am Aussenmantel des Ringraums einsetzbarer Ring im wesentlichen trapezförmigen Querschnitts ausgebildet ist, und dass die Füllung (6) eine Flüssigkeit oder eine Flüssigkeit mit körnigem Material ist.

2. Reibungskupplung nach Anspruch 1, dadurch gekennzeichnet, dass der Ringraum (5) über eine am Deckel (21) des Gehäuses (18) und an der Kupplungsscheibe (9) vorgesehene verschliessbare Öffnung (27) bzw. (28) auffüllbar ist.

3. Reibungskupplung nach Anspurch 1 oder 2, dadurch gekennzeichnet, dass die beiden axial verschiebbaren Kupplungsscheiben (8, 9) an einer äusseren Mantelfläche (12) einer verriegelten Nabe (11) der Treibwelle (2) in Drehrichtung formschlüssig angeordnet sind.

## Revendications

1. Accouplement à friction (1) en particulier pour la transmission de faibles moments de couple à vitesse de rotation constante présentant au moins un disque d'accouplement (8) tournant avec un arbre de commande (2) et un autre disque d'accouplement (9) travaillant avec celui-ci, accouplé par un arbre entraîné, lesdits disques d'accouplement étant disposés de façon mobile en direction axiale dans le sens de la fermeture de l'accouplement par un actionneur centrifuge, ledit actionneur centrifuge étant pourvu d'un espace circulaire (5) coaxial destiné à recevoir un remplissage (6) ainsi que d'au moins un élément de déviation (7) dans l'espace circulaire (5) rétrécissant l'espace circulaire radialement vers l'extérieur, caractérisé en ce que l'élément de déviation (7) a la forme d'un anneau de section essentiellement trapézoidale pouvant être mis en place sur la surface extérieure de l'espace circulaire et que le remplissage (6) est constitué par un liquide ou un liquide contenant une matière granuleuse.

2. Accouplement à friction selon la revendication 1, caractérisé en ce que l'espace circulaire (5) peut être rempli par une ouverture pouvant être fermée (27) ou (28) prévue sur le couvercle (21) de la boîte (18) et sur le disque d'accouplement (9).

3. Accouplement à friction selon la revendication 1 ou 2, caractérisé en ce que les deux disques d'accouplement (8, 9) axialement déplaçables sont disposés mécaniquement dans le sens de rotation sur une surface extérieure (12) d'un moyeu bloqué (11) de l'arbre de commande (2).

## Claims

1. Friction coupling (1), particularly for the transmission of small torques with constant rotational speed, comprising at least one coupling disc (8) rotating together with a driving shaft (2) and at least one further coupling disc (9) cooperating with the first one and connected to a driven shaft, which coupling discs are arranged such that they are in axial direction movable by a centrifugal force operation unit on closing the coupling, which centrifugal force operation unit is provided with a coaxial annular space (5) receiving a filling (6) as well as with at least one deflection element (7) within the annular space (5) and narrowing the annular space radially outwardly, characterized in that the deflection element (7) is formed to be a ring insertable into said annular space at the outside wall thereof and provided with an essentially trapezoidal cross section, and that the filling (6) is a liquid or a liquid provided with a granular material.

2. Friction coupling according to claim 1, characterized in that the annular space (5) can be filled through a closable aperture (27) or (28) respectively, provided in the cover (21) of the casing (18) and in the coupling disc (9).

3. Friction coupling according to claim 1 or 2, characterized in that both axially movable coupling discs (8, 9) are positively positioned in rotational direction on an outside wall surface (12) of a locking hub (11) of the driving shaft (2).

Fig.1

Fig.2